# EUROPEAN PATENT APPLICATION

(11) **EP 4 773 468 A1**
(43) Date of publication of application: **08.07.2026**
(21) Application number: 25226211.8
(22) Date of filing: 22.12.2025
(51) Int. Cl.: H02J 7/60, H02J 7/80

(54) **BATTERY APPARATUS, OPERATING METHOD THEREOF, AND BATTERY PACK**

(30) Priority: 03.01.2025 KR 20250000995
(71) Applicant: SAMSUNG SDI CO., LTD., Yongin-si, Gyeonggi-do 17084 (KR)
(72) Inventor: OH, Seo Taek, 16678 Suwon-si, Gyeonggi-do (KR)
(74) Representative: Gulde & Partner

(57) **Abstract**

A battery apparatus includes a charging path through which a charging current is supplied to a battery bank (B) that includes one or more battery cells (C), a charge control switch (SW_C) positioned on the charging path (300) and configured to selectively allow or block a flow of the charging current, and a processor (100) configured to wake up as the charging current is supplied through the charging path, to turn off the charge control switch, and to monitor cell voltages of the one or more battery cells (C) to detect an abnormal battery cell among the one or more battery cells.

## Description

### BACKGROUND

### 1. Field

Aspects of the present disclosure relate to a battery apparatus, an operating method thereof, and a battery pack.

### 2. Description of the Related Art

Secondary batteries are batteries that can be charged and discharged unlike primary batteries that cannot be recharged. Low-capacity secondary batteries are used in small portable electronic devices such as smartphones, feature phones, notebook computers, digital cameras, and camcorders, and high-capacity batteries are widely used as power sources for driving a motor, power storage batteries, and the like in hybrid vehicles, electric vehicles, and the like. Such a secondary battery includes an electrode assembly including a positive electrode and a negative electrode, a case accommodating the electrode assembly, and an electrode terminal electrically connected to the electrode assembly, and the like.

The above information disclosed in this Background section is for enhancement of understanding of the background of the present disclosure, and therefore, it may contain information that does not constitute related (or prior) art.

### SUMMARY

Aspects of the present disclosure are directed to a battery apparatus that can ensure safety during charging of a battery (e.g., a battery cell, a battery module, or a battery pack), an operating method thereof, and a battery pack including the same.

However, objects that the present invention intends to achieve are not limited to the above-described objects and other objects that are not described may be clearly understood by those skilled in the art from the following description.

According to an aspect of the present disclosure, there is provided a battery apparatus including: a charging path through which a charging current is supplied to a battery bank that includes one or more battery cells; a charge control switch positioned on the charging path and configured to selectively allow or block a flow of the charging current; and a processor configured to wake up as the charging current is supplied through the charging path, to turn off the charge control switch, and to monitor cell voltages of the one or more battery cells to detect an abnormal battery cell among the one or more battery cells.

In some embodiments, the processor is configured to detect the abnormal battery cell by determining whether a cell voltage of each of the one or more battery cells being monitored satisfies an abnormal battery cell detection condition associated with the cell voltage.

In some embodiments, the processor is configured to detect a target battery cell as the abnormal battery cell by determining that the abnormal battery cell detection condition is satisfied in response to a cell voltage of the target battery cell among the one or more battery cells being maintained at or below a reference voltage for a reference time.

In some embodiments, the reference voltage is defined as a cell voltage at which copper precipitation occurs during the charging of a corresponding battery cell.

In some embodiments, the processor, after being woken up as the charging current is supplied through the charging path, is configured to check a time elapsed from a previous shutdown time to a current wake-up time, and to perform an abnormal battery cell detection process only in response to the checked time being greater than or equal to a threshold time.

In some embodiments, the battery apparatus further includes a protection element configured to block a flow of the current supplied to the battery bank or a flow of the current drawn from the battery bank, wherein the processor is configured to operate the protection element to block the flow of the charging current supplied to the battery bank in response to the abnormal battery cell being detected.

In some embodiments, the processor is configured to turn on the charge control switch to initiate charging of the battery bank in response to the abnormal battery cell not being detected.

According to an aspect of the present disclosure, there is provided a battery pack including: a battery bank including one or more battery cells; a charging path through which a charging current is supplied to the battery bank; a charge control switch positioned on the charging path and configured to selectively allow or block a flow of the charging current; and a processor configured to wake up in response to the charging current being supplied on the charging path, to turn off the charge control switch, and to monitor cell voltages of the one or more battery cells to detect an abnormal battery cell among the one or more battery cells.

According to an aspect of the present disclosure, there is provided an operating method of a battery apparatus, the operating method including: waking up a processor of the battery apparatus as a charging current is supplied through a charging path of the battery apparatus, the charging path is one through which the charging current is supplied to a battery bank including one or more battery cells; turning off, by the processor, a charge control switch positioned on the charging path to allow or block a flow of the charging current; and monitoring, by the processor, cell voltages of the one or more battery cells and detecting an abnormal battery cell among the one or more battery cells.

In some embodiments, in the detecting of the abnormal battery cell, the processor is configured to detect the abnormal battery cell by determining whether a cell voltage of each of the one or more battery cells being monitored satisfies an abnormal battery cell detection condition associated with the cell voltage.

In some embodiments, in the detecting of the abnormal battery cell, the processor is configured to determine that the abnormal battery cell detection condition is satisfied in response to a cell voltage of a target battery cell among the one or more battery cells being maintained at or below a reference voltage for a reference time, and to detect the target battery cell as the abnormal battery cell.

In some embodiments, the reference voltage is defined as a cell voltage at which copper precipitation occurs during the charging of a corresponding battery cell.

In some embodiments, the operating method further includes: after the waking up of the processor, checking, by the processor, a checked time elapsed from a previous shutdown time to a current wake-up time; and comparing, by the processor, the checked time with a threshold time, wherein the turning off of the charge control switch and the detecting of the abnormal battery cell are performed only in response to the checked time being greater than or equal to the threshold time.

In some embodiments, the battery apparatus further includes a protection element configured to block a flow of the current supplied to the battery bank or a flow of the current drawn from the battery bank, and wherein the method further includes: operating, by the processor, the protection element to block the flow of the charging current supplied to the battery bank in response to the abnormal battery cell being detected.

In some embodiments, the operating method further includes: turning on, by the processor, the charge control switch to initiate charging of the battery bank in response to the abnormal battery cell not being detected.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings, in which:
FIG. 1 is an exemplary view illustrating a circuit structure of a battery apparatus according to some embodiments of the present disclosure; and
FIG. 2 is a flow chart illustrating an operating method of a battery apparatus according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

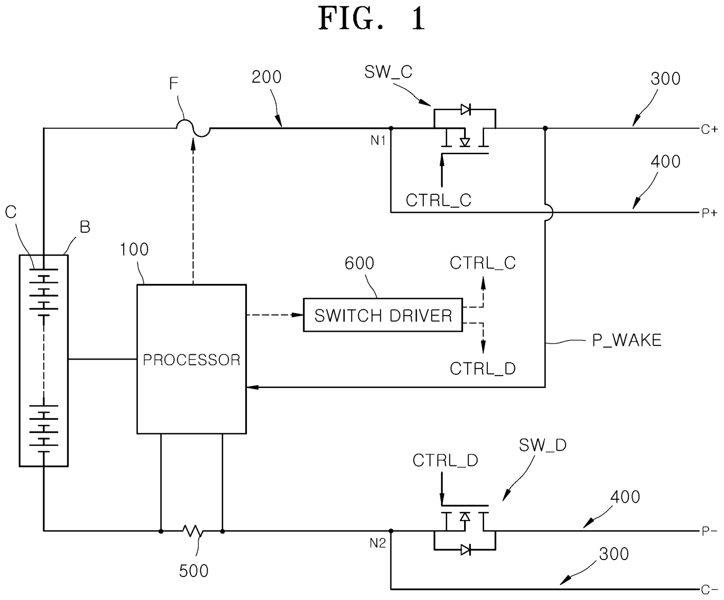

FIG. 1 is an exemplary view illustrating a circuit structure of a battery apparatus according to some embodiments of the present disclosure. Among the components illustrated in FIG. 1, each component except for a battery bank B may constitute the battery apparatus according to some embodiments., The battery apparatus may be implemented as a battery management system (BMS). The battery bank B described below includes one or more battery cells C. The battery bank B may be implemented as a structure in which a plurality of battery cells C are connected in series, in parallel, or a combination of the two. The battery bank B may refer to, for example, a battery module. The battery apparatus (e.g., BMS) illustrated in FIG. 1 may form a battery pack along with the battery bank B.

As illustrated in FIG. 1, the battery apparatus includes a processor 100, a charging path 300 and a charge control switch SW_C. The battery apparatus may further include a charge/discharge path 200, a discharging path 400, a current detection element 500, a switch driver 600, a discharge control switch SW_D, and/or a protection element F. FIG. 1 illustrates an example in which the charging path 300 and the discharging path 400 are separately configured. However, embodiments of the present disclosure are not limited thereto, and, in some examples, a structure may be provided in which the charging path 300 and the discharging path 400 are integrated into a single path.

The processor 100 may monitor a state of the battery bank B and/or each battery cell C. The processor may, in response to the monitoring, perform battery cell control operations based on the monitoring results. For example, the processor 100 may be configured to monitor the voltage, current, temperature, and/or SOC of the battery cell C, and may perform control operations such as balancing control, temperature control, and charge/discharge control of the battery cell C based on the monitoring results, or may perform protection operations such as switch control to prevent or substantially reduce the likelihood of the occurrence of over-discharge or over-charge conditions. The processor 100 may be configured to include an analog front end IC (AFE IC) and a micro controller unit (MCU) of the BMS (here, FIG. 1 illustrates an example of a structure in which the AFE IC and the MCU of the BMS are integrated into one processor 100, however, in other embodiments, the AFE IC and the MCU may be implemented as two separate processors).

The charge/discharge path 200 may function as a path for supplying charging current and drawing the discharging current to/from the battery bank B. That is, during charging of the battery bank B, the charging current is supplied to the battery bank B through the charge/discharge path 200, and during discharging of the battery bank B, the discharging current is supplied to the load through the charge/discharge path 200. For clarity of terminology, the path connecting a first node N1, the protection element F, the battery bank B, the current detection element 500, and a second node N2 in FIG. 1 is defined as the charge/discharge path 200. Here, the first and second nodes N1 and N2 correspond to nodes to which the charging path 300 and the discharging path 400 described below are commonly connected.

The charge/discharge path 200 may be provided with the protection element F for blocking the flow of current on the charge/discharge path 200. For example, the protection element F may be implemented as, for example, a self-control protector (SCP) fuse for blocking the flow of current on the charge/discharge path 200. The processor 100 described above may operate (e.g., melt) the protection element F when an abnormality occurs (e.g. in the battery bank, the one or more battery cells C, the battery apparatus or the battery pack), thereby blocking the flow of current on the charge/discharge path 200 (hereinafter, the term "operation of the protection element" is defined to mean "opening of a path provided with the protection element" or "melting the fuse"). An abnormality may occur, for example, when an internal wire of the battery bank, the battery apparatus or the battery pack is short-circuited due to excessive power consumption as for example of the battery pack or components thereof, thereby resulting in an overvoltage of one or more of the battery cells C. As the flow of current on the charge/discharge path 200 is blocked, the flow of charging current supplied to the battery bank B, or the flow of discharging current drawn from the battery bank B may be blocked.

The charging path 300 is formed as a structure branching off from the charge/discharge path 200 described above. The charging path 30 may correspond to a path through which the charging current supplied to the battery cell C flows for charging the one ore more battery cells C. For clarity of terminology, a path connecting a charging positive terminal C+ to which an external charger is connected and the first node N1 in FIG. 1, and a path connecting a charging negative terminal C-to which an external charger is connected and the second node N2 are defined as the charging path 300.

As illustrated in FIG. 1, the charging path 300 is provided with the charge control switch SW_C. The charge control switch SW_C may be turned on and off under the control of the processor 100 (e.g., in response to a control signal from the processor 100) and/or the switch driver 600 to control the flow of charging current on the charging path 300. The charge control switch SW_C may be implemented as a FET that is turned on and off under the control of the processor 100 (e.g., in response to a control signal from the processor 100) and/or the switch driver 600 to control the flow of charging current on the charging path 300. The processor 100 described above may control the on/off of the charge control switch SW_C through the switch driver 600 to control the flow of charging current on the charging path 300.

A wake-up signal path P_WAKE branched from a node of the charging positive terminal C+ on the charging path 300 (i.e., the node between the charging positive terminal C+ and the charge control switch SW_C) and connected to the processor 100 may be provided in the battery apparatus. In a shutdown state of the battery pack, the processor 100, which may be in a sleep state or power-off state, may be configured to wake up based on a charging voltage signal received through the wake-up signal path P_WAKE when an external charger is connected to the charging terminals (i.e., the charging positive terminal C+ and the charging negative terminal C).

The discharging path 400 is formed as a structure branching off from the charge/discharge path 200 described above, and may correspond to a path through which the discharging current drawn from the battery bank B flows. For clarity of terminology, in FIG. 1, a path connecting a discharging positive terminal (i.e., a positive terminal P+ of the battery pack) and the first node N1, and a path connecting a discharging negative terminal (i.e., a negative terminal P- of the battery pack) and the second node N2 are defined as the discharging path 400.

As illustrated in FIG. 1, the discharging path 400 may be provided with the discharge control switch SW_D. The discharge control switch SW_D may be turned on and off under the control of the processor 100 and/or the switch driver 600 to control the flow of discharging current on the discharging path 400. The discharge control switch SW_D may be implemented as a FET that is turned on and off under the control of the processor 100 and/or the switch driver 600 to control the flow of discharging current on the discharging path 400. The processor 100 described above may control the on/off of the discharge control switch SW_D through the switch driver 600 to control the flow of discharging current on the discharging path 400.

The current detection element 500 may be implemented as a shunt resistor connected to the charge/discharge path 200 to detect an overcurrent flowing in the battery cell C or the battery bank B. The switch driver 600 may correspond to a gate driver that controls the on/off operations of the charge control switch SW_C and the discharge control switch SW_D by applying control signals CTRL_C and CTRL_D to the charge control switch SW_C and/or the discharge control switch SW_D under the control of the processor 100. Accordingly, the processor 100 may detect the state in which the overcurrent flows in the battery cell C or the battery bank B through the current detection element 500, and may control the switch driver 600 to turn off the charge control switch SW_C or the discharge control switch SW_D, thereby preventing or substantially reducing the likelihood of damage to the battery cell C or the battery bank B due to overcurrent.

Based on the circuit structure of the battery apparatus described above, the following describes an operating method of the battery apparatus, which may ensure safety during charging.

When the battery cell C is charged in a state in which the battery cell C has an extremely low voltage (e.g. lower than a reference voltage), a copper precipitation phenomenon of the battery cell C may occur, thereby causing ignition due to an internal short circuit. Therefore, it is desirable to determine whether the battery cell C has a voltage low enough to cause copper precipitation. In the case of a method of checking whether the battery cell C has a low voltage (e.g. lower than a reference voltage) in a state in which the charge control switch SW_C is turned on and the charging current is continuously supplied to the battery cell C, the voltage of the battery bank B continues to rise during the time taken to check the low voltage of the battery cell C, which may lower the accuracy of checking the voltage of the battery cell C. In addition, as a result, charging may occur in a state in which the battery cell C has a sufficiently low voltage to cause copper precipitation, which may cause the ignition due to copper precipitation.

To solve the above problem, the processor 100 is configured to, when woken up by the supply of charging current to the charging path 300, first turn off the charge control switch SW_C, and then monitor the cell voltages of one or more battery cells C to detect (or identify) an abnormal battery cell among the one or more battery cells C.

That is, the processor 100 first turns off the charge control switch SW_C to prevent the battery cell C in the low voltage state from being charged after the charging current from the charger is supplied to the charging path 300 and the processor 100 wakes up. In the state in which the flow of charging current supplied to the battery cell C is blocked due to the charge control switch SW_C being turned off, the processor 100 may detect (or identify) an abnormal battery cell among one or more battery cells C by monitoring the cell voltages of the one or more battery cells C. In this case, the processor 100 may detect (or identify) an abnormal battery cell by determining whether the cell voltage of each of the one or more battery cells C being monitored satisfies a predefined abnormal battery cell detection condition associated with the cell voltage.

When a battery cell C, which is the target of cell voltage monitoring, is defined as a target battery cell, the abnormal battery cell detection condition may be a condition in which the cell voltage of the target battery cell is maintained at or below a set or predefined reference voltage (or reference voltage) for a set or predefined reference time (or reference time). That is, the processor 100 may determine that the abnormal battery cell detection condition is satisfied when (e.g., based on a condition that) the cell voltage of the target battery cell is maintained at or below the predefined reference voltage for the predefined reference time, and may detect (or identify) the target battery cell as an abnormal battery cell. Here, the reference voltage may be set or predefined as the cell voltage (i.e., a lower voltage limit) that may cause copper precipitation during charging of the battery cell C. For example, a specific value (e.g., 1.0V) may be predefined in advance. The specific value may be based on experimental results. The reference time serves as a criterion for determining whether the currently measured (monitored) cell voltage corresponds to a transient value. The specific value may be predefined in advance (e.g., 5 seconds). The specific value may be based on experimental results.

The above-described abnormal battery cell detection process may be configured to be performed only when there is a possibility that the battery cell C constituting the battery bank B has a low voltage, rather than being performed continuously (i.e. each time) after the processor 100 wakes up. Considering that when the battery pack is left in the shut-down state for a long period of time, the voltage of the battery cell C may decrease due to dark current or leakage current and reach a value lower than the reference voltage described above, the processor 100 according to some embodiments may be configured to wake up by supplying the charging current to the charging path 300, and then check the time elapsed from a previous shut-down time to a current wake-up time, and perform the abnormal battery cell detection process only when (e.g., only based on a condition that) the checked time is greater than or equal to the set or predefined threshold time (or threshold time). This may increase a process efficiency by avoiding an unnecessary detection process. The above threshold time may be set or predefined, e.g., based on experimental results regarding the time required for the cell voltage of the battery cell C to be formed below the reference voltage. The processor 100 may use a timer built into the battery apparatus (e.g. the BMS) to check the time elapsed from the previous shutdown time to the current wake-up time, or may receive the corresponding time from a main electronic control unit (ECU) of the product to which the battery pack is applied.

When (e.g., in response to a state in which) the abnormal battery cell is not detected (or identified) through the abnormal cell detection process, the processor 100 may turn on the charge control switch SW_C to initiate normal charging of the battery bank B. On the other hand, when the abnormal battery cell is detected (or identified) through the abnormal cell detection process (e.g., in response to the abnormal battery cell being identified through the abnormal cell detection process), the processor 100 may operate the protection element F to block the flow of charging current supplied to the battery bank B. As the protection element F operates, subsequent use of the battery pack provided with the battery bank B is prohibited, so that ignition due to copper precipitation may be prevented in advance. The processor 100 may notify a user of the battery pack use prohibition state through a separate interface device (e.g., an LED indicator provided in a product provided with a battery pack) after activating the protection element F. The user may take follow-up measures such as replacing the battery pack or the battery bank B provided in the product.

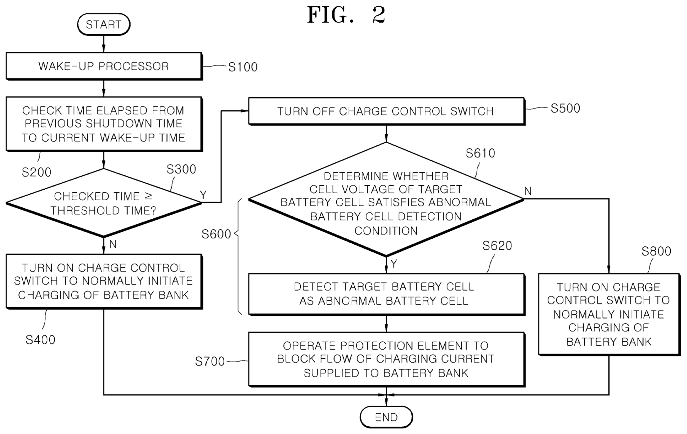

FIG. 2 is a flow chart illustrating an operating method of a battery apparatus according to some embodiments of the present disclosure. Referring to FIG. 2, the operating method of the battery apparatus according to some embodiments is described. A detailed description of the overlapping portion with the above-described content is omitted and the description focuses on a time-series configuration.

First, the processor 100 wakes up as charging current is supplied to the charging path 300 (e.g., wakes up in response to charging current being supplied to the charging path 300; S100).

The processor 100, which has woken up, may check a time elapsed from a previous shutdown time to a current wake-up time (S200) and may determine whether the checked time is greater than or equal to a set or predefined threshold time (or threshold time) (S300).

In operation S300, when it is determined (i.e., in response to determining) that the time elapsed from the previous shutdown time to the current wake-up time is less than the threshold time, the processor 100 may determine that each battery cell C is unlikely to have a sufficiently low voltage capable of causing copper precipitation, and thus turns on the charge control switch SW_C to initiate normal charging of the battery bank B (S400).

When the time elapsed from the previous shutdown time to the current wake-up time is determined to be greater than or equal to the threshold time, the processor 100 may determine that each battery cell C has a possibility of having a sufficiently low voltage that may cause copper precipitation, turns off the charge control switch SW_C (S500), and monitors the cell voltages of one or more battery cells C to detect (or identify) an abnormal battery cell among the one or more battery cells C (S600).

In operation S600, the processor 100 may detects (or identifies) an abnormal battery cell by determining whether the cell voltage of each of the one or more battery cells C being monitored satisfies a predefined abnormal battery cell detection condition associated with the cell voltage. Specifically, the processor 100 may determine that the abnormal battery cell detection condition is satisfied when a cell voltage of a target battery cell among the one or more battery cells C is maintained at or below a set or predefined reference voltage (or reference voltage) for a set or predefined reference time (or reference time) (S610), and detects (or identifies) the target battery cell as an abnormal battery cell (S620). After operation S620, the processor 100 may operates the protection element F to block the flow of charging current supplied to the battery bank B (S700).

When the abnormal battery cell is not detected (or identified) through operation S600, the processor 100 may turn on the charge control switch SW_C to initiate normal charging of the battery bank B (S800).

As described above, according to the present disclosure, a charging mechanism is adopted that first turns off a charge control switch configured to block or allow the flow of charge current during charging of a battery bank including one or more battery cells, monitors cell voltages of the one or more battery cells, detects (or identifies) an abnormal battery cell among the one or more battery cells, and then starts or stops charging the battery bank based on the detection result, thereby preventing or substantially reducing the likelihood of ignition caused by copper precipitation during the charging of the battery bank and ensuring the safety of the battery.

The implementations described herein may be implemented as, for example, a method or process, an apparatus, a software program, a data stream or a signal. Even when discussed in the context of only a single form of implementation (e.g., discussed only as a method), the implementation of the features discussed may also be implemented in other forms (e.g., as an apparatus or a software program). The apparatus may be implemented in suitable hardware, software, firmware, and the like. The method may be implemented in a device such as a processor, which generally refers to a processing device including, for example, a computer, a microprocessor, an integrated circuit, or a programmable logic device. The processor also includes a communication device such as a computer, a cell phone, a personal digital assistant ("PDA"), and other devices that facilitate communication of information between end-users.

According to the present disclosure, by adopting a charging mechanism that first turns off a charge control switch configured to block or allow the flow of charge current during the charging of a battery bank including one or more battery cells, monitors cell voltages of the one or more battery cells, detects (or identifies) an abnormal battery cell among the one or more battery cells, and then starts or stops charging the battery bank based on the detection result, it is possible to prevent or substantially reduce the likelihood of the occurrence of ignition caused by copper precipitation during the charging of the battery bank and thus ensure the safety of the battery.

However, effects that can be achieved through the present invention are not limited to the above-described effects and other effects that are not described may be clearly understood by those skilled in the art from the detailed descriptions.

Although the present disclosure has been described with reference to embodiments and drawings illustrating aspects thereof, the present disclosure is not limited thereto.

## Claims

1. A battery apparatus comprising:
a charging path (300) through which a charging current is supplied to a battery bank (B) that comprises one or more battery cells (C);
a charge control switch (SW_C) positioned on the charging path (300) and configured to selectively allow or block a flow of the charging current; and
a processor (100) configured to:
wake up as the charging current is supplied through the charging path (300),
turn off the charge control switch (SW_C), and
monitor cell voltages of the one or more battery cells (C) to detect an abnormal battery cell among the one or more battery cells (C).

2. The battery apparatus of claim 1, wherein the processor (100) is configured to:
detect the abnormal battery cell by determining whether a cell voltage of each of the one or more battery cells (C) being monitored satisfies an abnormal battery cell detection condition associated with the cell voltage.

3. The battery apparatus of claim 2, wherein the processor (100) is configured to:
detect a target battery cell as the abnormal battery cell by determining that the abnormal battery cell detection condition is satisfied based on a cell voltage of the target battery cell among the one or more battery cells (C) being maintained at or below a reference voltage for a reference time.

4. The battery apparatus of claim 3, wherein the reference voltage is defined as a cell voltage at which copper precipitation occurs during the charging of a corresponding battery cell.

5. The battery apparatus of one of the preceding claims 1 to 4, wherein the processor (100) is configured to:
after being woken up as the charging current is supplied through the charging path (300), check a time elapsed from a previous shutdown time to a current wake-up time, and
perform an abnormal battery cell detection process based on the checked time being greater than or equal to a threshold time.

6. The battery apparatus of one of the preceding claims 1 to 5, further comprising a protection element (F) configured to block a flow of the current supplied to the battery bank (B) or a flow of the current drawn from the battery bank (B),
wherein the processor (100) is configured to:
operate the protection element (F) to block the flow of the charging current supplied to the battery bank (B) based on the abnormal battery cell being detected.

7. The battery apparatus of one of the preceding claims 1 to 6, wherein the processor (100) is configured to:
turn on the charge control switch (SW_C) to initiate charging of the battery bank (B) based on the abnormal battery cell not being detected.

8. A battery pack comprising:
a battery bank (B) comprising one or more battery cells (C); and
the battery apparatus according to any one of the preceding claims 1 to 7.

9. An operating method of a battery apparatus, the operating method comprising:
waking up (S100) a processor (100) of the battery apparatus as a charging current is supplied through a charging path (300) of the battery apparatus, the charging path (300) is one through which the charging current is supplied to a battery bank (B) comprising one or more battery cells (C);
turning off (S500), by the processor (100), a charge control switch (SW_C) positioned on the charging path (300) to allow or block a flow of the charging current; and
monitoring (S600), by the processor (100), cell voltages of the one or more battery cells and detecting an abnormal battery cell among the one or more battery cells (C).

10. The operating method of claim 9, wherein in the detecting (S600) of the abnormal battery cell, the method comprises detecting (S620) the abnormal battery cell by determining whether a cell voltage of each of the one or more battery cells being monitored satisfies an abnormal battery cell detection condition associated with the cell voltage.

11. The operating method of claim 10, wherein in the detecting of the abnormal battery cell (S600), the method comprises determining that the abnormal battery cell detection condition is satisfied based on a cell voltage of a target battery cell among the one or more battery cells being maintained at or below a reference voltage for a reference time, and detecting the target battery cell as the abnormal battery cell.

12. The operating method of claim 11, wherein the reference voltage is defined as a cell voltage at which copper precipitation occurs during the charging of a corresponding battery cell.

13. The operating method of any one of the preceding claims 9 to 12, further comprising: after the waking up of the processor (100),
checking (S200), by the processor (100), a checked time elapsed from a previous shutdown time to a current wake-up time; and
comparing (S300), by the processor (100), the checked time with a threshold time,
wherein the turning off (S500) of the charge control switch (SW_C) and the detecting of the abnormal battery cell are performed based on the checked time being greater than or equal to the threshold time.

14. The operating method of any one of the preceding claims 9 to 13,
wherein the battery apparatus further comprises a protection element (F) configured to block a flow of the current supplied to the battery bank or a flow of the current drawn from the battery bank (B), and
wherein the method further comprises:
operating (S700), by the processor (100), the protection element (F) to block the flow of the charging current supplied to the battery bank (B) based on the abnormal battery cell being detected.

15. The operating method of any one of the preceding claims 9 to 14, further comprising:
turning on (S800), by the processor (100), the charge control switch (SW_C) to initiate charging of the battery bank (B) based on the abnormal battery cell not being detected.
